# EUROPEAN PATENT SPECIFICATION

(11) **EP 3 529 465 B1**
(45) Date of publication and mention of the grant of the patent: **27.01.2021**
(21) Application number: 17769035.1
(22) Date of filing: 15.09.2017
(51) Int. Cl.: F01D 17/24, F01D 17/02, F01D 21/00, F16K 31/06

(54) **ELECTRIC CONTROL CIRCUIT FOR A TURBINE ENGINE**
ELEKTRISCHER STEUERKREIS FÜR EINEN TURBINENMOTOR
CIRCUIT DE COMMANDE ÉLECTRIQUE POUR UN MOTEUR À TURBINE

(30) Priority: 08.12.2016 EP 16202874
(43) Date of publication of application: 28.08.2019
(73) Proprietor: Siemens Energy Global GmbH & Co. KG, 81739 München (DE)
(72) Inventor: KUBIS, Stanislav, 66482 Ricany (CZ)
(86) International application number: PCT/EP2017/073223
(87) International publication number: WO 2018/103903

(56) References cited:
- WO-A2-02/19045
- DE-A1-102013 003 976
- GB-A- 1 327 017
- US-A- 3 931 714

## Description

### Field of invention

The present invention relates to an electric control circuit for controlling a pneumatic/hydraulic system in a turbine engine. Particularly, but no exclusively, the pneumatic/hydraulic system can be used for operating the turbine engine during safety operations. Particularly, but no exclusively, the pneumatic/hydraulic system can be applied to steam turbines.

### Art Background

In the technical field of steam turbines or, more in general, of other types of turbine engines or of other type of machines, it is necessary to monitor various signals to protect the operation of the machine. Such signals may include, for example, the rotation speed of the shaft of the machine. According to the current best technical practice the most critical parameters are measured by a plurality of independent instruments or transducers (for example, three independent instruments or transducers), each measuring the same critical parameter, for example rotation speed of the shaft. Safety operations, for example stopping the machine, are activated only when a subset of the instruments (for example, two out of three instruments) fails. This normally provides the required trade-off between operability and safety of the machine.

From WO 02/19045 A2, it is known to monitor in a movable machine a plurality of machine parts currently being controlled by the control program. Such parts are identified and counted by a plurality of transducers. The machine parts actually moved by the control program are simultaneously counted. When the numbers differ from one another, a fault message and identified machine parts as possible fault sources are displayed. Each transducer serves one part of the movable machine.
In US 3931714 A two transducers are disposed in an electric control circuit including solenoid valves for operating an hydraulic system. The failure of any of the two transducers causes the intervention of the solenoid valves.

In case the principle of "2 out of 3 signals" is applied, this practically means that, if one of the three instruments fail, while the other two of them continue to follow regularly the operations of the machine, the failed instrument is repaired or replaced as soon as possible, while the machine continues also to be operated regularly. If two instruments fail, the machine is stopped.

### Summary of the Invention

It may be an objective of the present invention to provide an electric control circuit for a turbine engine, which applies the above described principle in a simple, reliable, durable and cost-effective way.

These objectives are solved by an electric control circuit for a turbine engine according to the independent claim. The dependent claims describe advantageous developments and modifications of the invention.

According to the present invention, an electric control circuit for controlling a pneumatic/hydraulic system in a turbine engine includes:
- at least an electromagnet for controlling at least a valve of the hydraulic system,
- a plurality of transducers, connected to a plurality of respective switches, the plurality of switches being disposed in series in the electric control circuit, the plurality of switches being normally closed and traversed by the current flowing in the electromagnet, the failure of a transducers causing the opening of the respective switch,
- a plurality of resistances, each resistance being disposed in paralleled with one of the switches of said plurality of switches,
the failure of a transducers causes the opening of the respective switch and current flowing through the respective resistance, the electromagnet being dimensioned in such a way to command a change of pressure in the pneumatic/hydraulic system when a portion of the plurality of transducers fails. Advantageously, such dimensioning provides an automatic command of the valve when the designated portion of the total plurality of transducers fails.
Further advantageously, this permits to know in advance the decrease of the current in the circuit, caused by the failure of each instruments

According to a possible embodiment of the present invention, the resistances in parallel with the switches are identical. Advantageously, this makes the decrease of the current in the circuit proportional caused by the failure of one or more instruments proportional to the number of instruments, which have failed.

According to a possible embodiment of the present invention, the number of the plurality of transducers is 3 and the number of the portion of plurality of transducers causing the command of the valve is 2.

According to another possible embodiment of the present invention, the electric control circuit comprises a semiconductor for controlling and/or regulating the amount of current flowing in the circuit.

### Brief Description of the Drawing

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.
Fig. 1 shows a schematic diagram including a first embodiment of an electric control circuit for controlling a pneumatic/hydraulic system in a turbine engine and a portion of such pneumatic/hydraulic system,
Fig. 2 shows another schematic diagram including a second embodiment of an electric control circuit for controlling a pneumatic/hydraulic system in a turbine engine and a portion of such pneumatic/hydraulic system.

### Detailed Description

The illustrations in the drawings are schematic. It is noted that in different figures, similar or identical elements are provided with the same reference signs.

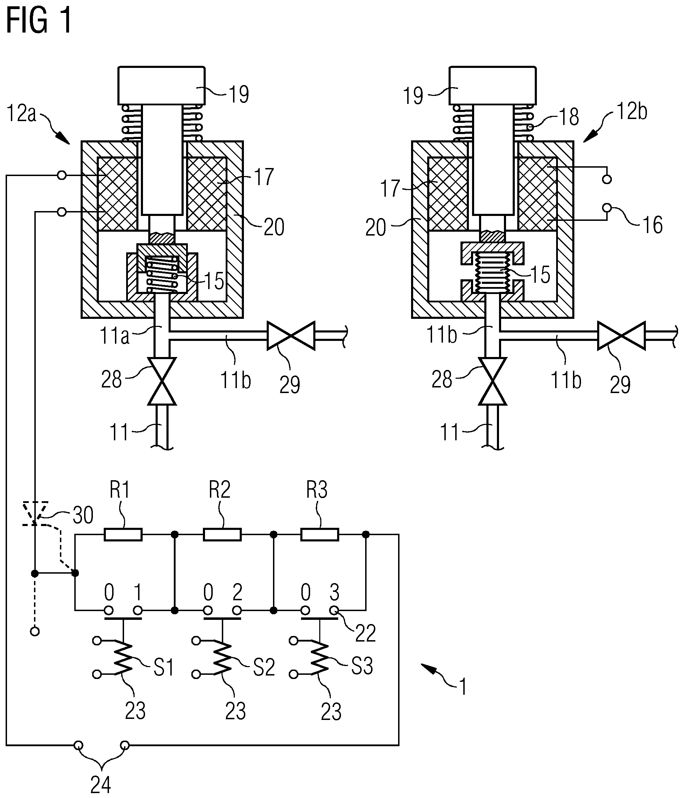

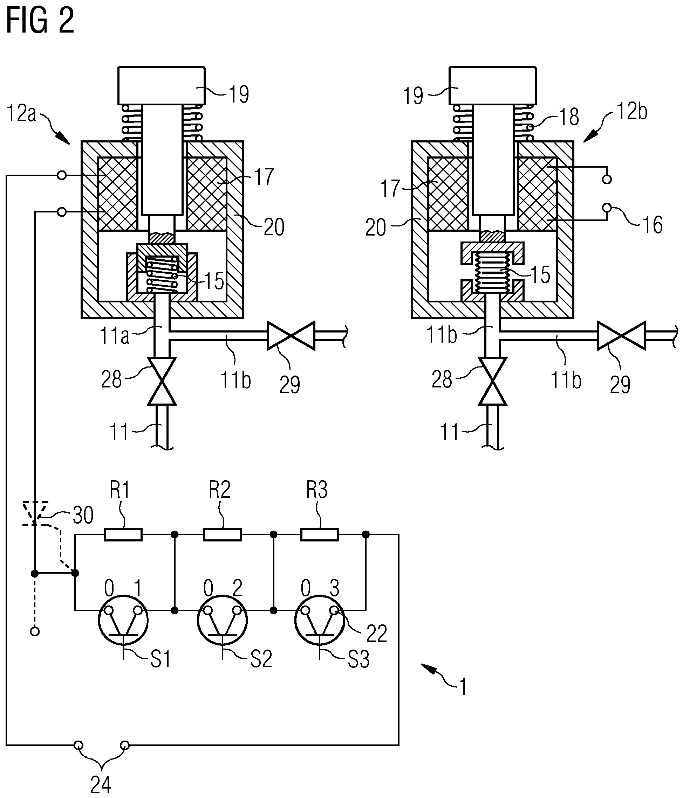

**Figs. 1** and **2** show two respective embodiments of an electric control circuit 1 for controlling an hydraulic system 11 (partially represented) in a steam turbine engine (not represented) .
The control circuit 1 includes at least an electromagnet 17 (two electromagnets 17 in the embodiment of Fig. 1) for controlling at least a valve 28 (two valves 28 in the embodiment of Fig. 1) of the hydraulic system 11.

According to another possible embodiment of the invention (not shown) instead of the valve 28 of the hydraulic system 11 a slide valve or a trip mechanism may be used.

The two electromagnets 17 are also part of two actuators 12a, 12b, respectively, serving as pressure generators in the hydraulic system 11.
Each electromagnet 17 is connected to the other circuitry components of the electric control circuit 1 through a couple of contacts 16.
Each of the two actuators 12a, 12b comprises:
- a frame 20, inside which one electromagnet 17 is accommodated,
- a core 19 movable along the electromagnet 17,
- a spring 18 provided between the core 19 and the frame 20,
- a piston or bellow 15 (in the embodiment of Fig. 1 actuator 12a comprises a piston 15, while actuator 12b comprises a bellow 15) connecting the core 19 to the valve 28 of the hydraulic system 11.
The hydraulic system 11 further comprises, for each valve 28:
- a first brunch 11a, connecting the valve 28 to the piston/bellow 15,
- a second brunch 11b, connecting the first brunch 11a to a fluid tank (not shown) and comprising a second valve 29 of the hydraulic system 11.

According to another possible embodiment of the invention (not shown in the attached figures) the core 19 is directly connected to a spindle of the valve 28. This embodiment is typical in the case where the valve 28 is of small dimensions.

In operation, when the nominal current circulates in the electric control circuit 1, each electromagnet 17 activates the respective core 19 and the respective piston/bellow 15 against the respective spring 18, to keep the valve 28 open and to maintain the nominal fluid pressure, required by the operative conditions of steam turbine engine, in the hydraulic system 11. At the same time, the second valve 29 is kept closed to isolate the hydraulic system 11 from the fluid tank.

The electric control circuit 1 comprises a plurality of N transducers (three transducers S1, S2, S3, partially represented in figure 1). For example, electric control circuit 1 may comprise three transducers, each measuring the speed of the shaft of the steam turbine independently from the other two.

According to other embodiments of the present invention, the electric control circuit 1 may comprises a different number and a different type of transducers.
The plurality of N transducers is disposed in the electric control circuit in such a way that a failure in any of the plurality of N transducers causes a decrease of the current flowing in the electromagnet(s) 17.
Each electromagnet 17 is dimensioned in such a way to command a change (for example, a reduction) of pressure in the hydraulic system 11 when a portion n of the plurality of N transducers fails.

In the embodiment of the attached figure, each electromagnet 17 is dimensioned in such a way to command the release of pressure in the hydraulic system 11, for example by means of valves and/or actuators (not shown in the attached figures). In such a case the current flowing in the electromagnet 17 is no more sufficient to contrast the force of the spring 18 and therefore the core is released, activating such valves and/or actuators which release the pressure from the hydraulic system 11. This activates safety operations in the steam turbine, including, for example stopping the steam turbine.
In the embodiment of the attached figure, the electric control circuit 1 comprises in series:
- the electromagnet(s) 17,
- a semiconductor 30 for controlling the amount of current flowing in the circuit 1,
- a plurality of N switches 22 (three switches 22 in the embodiment of Fig. 1), each switch 22 being coupled to a relay of a respective transducer of the plurality of N transducers.

Alternatively (as shown in figure 2), according to another possible embodiment of the invention, instead of relays, semiconductors (transistor, thyristor) may be used.

According to another possible embodiment of the invention (not shown), in particular when the electric power of the electromagnet 17 is lower than a threshold, the semiconductor 30 is not used and the electromagnet(s) 17 is directly connected to the plurality of N switches 2.

In operation, when the respective transducer is correctly working, the respective switch 22 is closed ("on" position) and traversed by the nominal current flowing in the electromagnet 17. The failure of a transducer causes the opening of the respective switch 22 ("off" position), - a source of electric current (not represented in the attached Fig. 1) attached to a couple of contacts 24.
The electric control circuit 1 further comprises a plurality of N resistances (three resistances R1-R3 in the embodiment of Fig.), each resistance being disposed in paralleled with one of the switches of the plurality of N switches 22. The failure of a transducer S1-S3 causes the opening of the respective switch 22 and consequently current flowing through the respective resistance R1-R3. As a result, the total amount of current flowing in the electric control circuit 1 while decrease of a rate of Ri/(R1+R2+R3), where Ri is the value of resistance of the resistance corresponding to the failed transducer.

When resistances R1-R3 are identical, the failure of a transducer S1-S3 causes a decrease of 1/3 of the amount of current flowing in the electric control circuit 1. In such a case, each electromagnet 17 may be dimensioned in such a way to command the release of pressure in the hydraulic system 11 when two of the three transducers S1-S3 fail, i.e. when the amount of current flowing in the electric control circuit 1 decrease of 2/3.

In the embodiment of the attached Fig.1, each relay of the transducers S1-S3 comprises a respective winding 23 and a respective core which is active on a respective switch 22. In operation, when the respective transducer is correctly working, the respective switch 22 is kept closed ("on" position) by means of the core of the respective relay connecting a pair of contact 0-1, 0-2, 0-3 of the respective switch 22. The failure of a transducer interrupts the current flowing in the respective winding 23 and consequently the loss of contact between the relay and the respective pair of contact 0-1, 0-2, 0-3 of the respective switch 22 ("off" position).
A similar functioning can be obtained by using the plurality of N semiconductors (transistor, thyristor) of figure 2, instead of the relays of figure 1.

Valves 28 and second valves 29 can be used as follow to test the functioning of the electric control circuit 1 according to the procedure described in the following.
Firstly valve(s) 28 is (are) closed and the second valve(s) 29 is (are) opened. The pressure is released to the fluid tank.
The contacts 0-1, 0-2, 0-3 of each switch 22 are switched in turn "on" and "off". In every switching "off", the voltage at the contacts 16 has to decrease about one third of its nominal value. The switching "off" of two of the switches 22 is expected to activate the core 19 and the piston (or below) 15 of the electromagnet 17.

The test of the electromagnet is terminated finished by the following sequence of operation:
- closing of the valve(s) 29,
- bringing the core 19 of the electromagnet 17 in its operative position which assures the maintenance of the nominal pressure in the hydraulic system (11),
- finally opening the valve(s) 28.

## Claims

1. Electric control circuit (1) for controlling a pneumatic/hydraulic system (11) in a turbine engine, the control circuit (1) including:
- at least an electromagnet (17) for controlling the hydraulic system (11),
- a plurality (N) of transducers (S1-S3), connected to a plurality of respective switches (22), the plurality (N) of switches (22) being disposed in series in the electric control circuit, the plurality (N) of switches (22) being normally closed and traversed by the current flowing in the electromagnet (17), the failure of a transducers (S1-S3) causing the opening of the respective switch (22),
- a plurality (N) of resistances (R1-R3), each resistance being disposed in paralleled with one of the switches of said plurality (N) of switches (22),
**characterized in that**
the failure of a transducers (S1-S3) causes the opening of the respective switch (22) and current flowing through the respective resistance (R1-R3), the electromagnet (17) being dimensioned in such a way to command a change of pressure in the pneumatic/hydraulic system (11) when a portion (n) of the plurality (N) of transducers (S1-S3) fails.

2. The electric control circuit (1) according to claim 1, wherein the opening of the respective switch (22) is commanded by a relay of the respective transducer (S1-S3).

3. The electric control circuit (1) according to claim 1, wherein the opening of the respective switch (22) is commanded by a semiconductor device of the respective transducer (S1-S3).

4. The electric control circuit (1) according to claim 1, wherein the resistances (R1-R3) are identical.

5. The electric control circuit (1) according to any of the preceding claims, wherein the number of the plurality (N) of transducers (S1-S3) is 3 and the number of the portion (n) of plurality (N) of transducers (S1-S3) causing the change of pressure in the hydraulic system (11) is 2.

6. The electric control circuit (1) according to any of the preceding claims, wherein the electric control circuit (1) comprises a semiconductor (30) for controlling the amount of current flowing in the circuit (1).

7. A pneumatic/hydraulic system (11) for providing a source of pressure in a turbine engine, the pneumatic/hydraulic system (11) including an electric control circuit (1) according to any of the preceding claims.

## Patentansprüche

1. Steuerstromkreis (1) zum Steuern eines pneumatischen/hydraulischen Systems (11) einer Turbine, der Folgendes aufweist:
- zumindest einen Elektromagneten (17) zum Steuern des hydraulischen Systems (11),
- mehrere (N) Wandler (S1 bis S3), die mit mehreren jeweiligen Schaltern (22) verbunden sind, wobei die mehreren (N) Schalter (22) in dem Steuerstromkreis in Reihe geschaltet sind, wobei die mehreren (N) Schalter (22) normalerweise geschlossen sind und von dem im Elektromagneten (17) fließenden Strom durchflossen werden, wobei der Ausfall eines Wandlers (S1 bis S3) das Öffnen des jeweiligen Schalters (22) veranlasst,
- mehrere (N) Widerstände (R1 bis R3), wobei jeder Widerstand mit einem der mehreren (N) Schalter (22) parallelgeschaltet ist,
**dadurch gekennzeichnet, dass**
der Ausfall eines Wandlers (S1 bis S3) das Öffnen des jeweiligen Schalters (22) und ein Fließen von Strom durch den jeweiligen Widerstand (R1 bis R3) veranlasst, wobei der Elektromagnet (17) so bemessen ist, dass er eine Druckänderung in dem pneumatischen/hydraulischen System (11) bewirkt, wenn ein Teil (n) der mehreren (N) Wandler (S1 bis S3) ausfällt.

2. Steuerstromkreis (1) nach Anspruch 1, wobei das Öffnen des jeweiligen Schalters (22) durch ein Relais des jeweiligen Wandlers (S1 bis S3) bewirkt wird.

3. Steuerstromkreis (1) nach Anspruch 1, wobei das Öffnen des jeweiligen Schalters (22) durch ein Halbleiterbauelement des jeweiligen Wandlers (S1 bis S3) bewirkt wird.

4. Steuerstromkreis (1) nach Anspruch 1, wobei die Widerstände (R1 bis R3) gleich sind.

5. Steuerstromkreis (1) nach einem der vorherigen Ansprüche, wobei die Anzahl der mehreren (N) Wandler (S1 bis S3) 3 und die Anzahl des Teils (n) der mehreren (N) Wandler (S1 bis S3), die die Druckänderung in dem hydraulischen System (11) veranlassen, 2 beträgt.

6. Steuerstromkreis (1) nach einem der vorherigen Ansprüche, wobei der Steuerstromkreis (1) einen Halbleiter (30) zum Steuern der im Stromkreis (1) fließenden Strommenge umfasst.

7. Pneumatisches/hydraulisches System (11) zum Bereitstellen einer Druckquelle in einer Turbine, das einen Steuerstromkreis (1) nach einem der vorherigen Ansprüche aufweist.

## Revendications

1. Circuit de contrôle électrique (1) destiné au contrôle d'un système pneumatique/hydraulique (11) dans un moteur à turbine, le circuit de contrôle (1) comprenant :
- au moins un électroaimant (17) destiné au contrôle du système hydraulique (11),
- une pluralité (N) de transducteurs (S1-S3), raccordés à une pluralité de commutateurs respectifs (22), la pluralité (N) de commutateurs (22) étant disposés en série dans le circuit de contrôle électrique, la pluralité (N) de commutateurs (22) étant normalement fermés et traversés par le courant s'écoulant dans l'électroaimant (17), la défaillance d'un transducteur (S1-S3) provoquant l'ouverture du commutateur respectif (22),
- une pluralité (N) de résistances (R1-R3), chaque résistance étant disposée en parallèle avec un des commutateurs de ladite pluralité (N) de commutateurs (22),
**caractérisé en ce que**
la défaillance d'un transducteur (S1-S3) provoque l'ouverture du commutateur respectif (22) et un courant s'écoulant au travers de la résistance respective (R1-R3), l'électroaimant (17) étant dimensionné de manière à commander une modification de pression dans le système pneumatique/hydraulique (11) lorsqu'une partie (n) de la pluralité (N) de transducteurs (S1-S3) tombe en panne.

2. Circuit de contrôle électrique (1) selon la revendication 1, dans lequel l'ouverture du commutateur respectif (22) est commandée par un relais du transducteur respectif (S1-S3).

3. Circuit de contrôle électrique (1) selon la revendication 1, dans lequel l'ouverture du commutateur respectif (22) est commandée par un dispositif à semiconducteurs du transducteur respectif (S1-S3).

4. Circuit de contrôle électrique (1) selon la revendication 1, dans lequel les résistances (R1-R3) sont identiques.

5. Circuit de contrôle électrique (1) selon l'une quelconque des revendications précédentes, dans lequel le nombre de la pluralité (N) de transducteurs (S1-S3) est 3 et le nombre de la partie (n) de la pluralité (N) de transducteurs (S1-S3) provoquant la modification de pression dans le système hydraulique (11) est 2.

6. Circuit de contrôle électrique (1) selon l'une quelconque des revendications précédentes, dans lequel le circuit de contrôle électrique (1) comprend un semiconducteur (30) destiné au contrôle de la quantité de courant s'écoulant dans le circuit (1).

7. Système pneumatique/hydraulique (11) destiné à la fourniture d'une source de pression dans un moteur à turbine, le système pneumatique/hydraulique (11) comprenant un circuit de contrôle électrique (1) selon l'une quelconque des revendications précédentes.
